(19) Europäisches Patentamt / European Patent Office / Office européen des brevets

(11) **EP 2 442 579 A2**

(12) **EUROPEAN PATENT APPLICATION**

(43) Date of publication:
**18.04.2012 Bulletin 2012/16**

(51) Int Cl.:
***H04N 13/04*** *(2006.01)*

(21) Application number: **11159668.0**

(22) Date of filing: **24.03.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **22.09.2010 JP 2010211553**

(71) Applicant: **Hitachi Consumer Electronics Co., Ltd. Tokyo (JP)**

(72) Inventors:
• **Oikawa, Michio**
  **Chiyoda-ku, Tokyo 100-8220 (JP)**

• **Yamasaki, Masami**
  **Chiyoda-ku, Tokyo 100-8220 (JP)**
• **Koike, Takafumi**
  **Chiyoda-ku, Tokyo 100-8220 (JP)**
• **Sakai, Hideyuki**
  **Chiyoda-ku, Tokyo 100-8220 (JP)**
• **Seo, Yoshiho**
  **Chiyoda-ku, Tokyo 100-8220 (JP)**
• **Ikeda, Hidehiro**
  **Chiyoda-ku, Tokyo 100-8220 (JP)**

(74) Representative: **Hackney, Nigel John et al**
  **Mewburn Ellis LLP**
  **33 Gutter Lane**
  **London EC2V 8AS (GB)**

(54) **Autostereoscopic display**

(57) By installing a diffuser (7) between a group of projectors (1) and lenses (2) to spread light rays from the projector group, it is possible to provide pixels with such sizes as to give perception that pixels are adjacent to each other. As a result, smooth representation of images and video display with a high stereoscopic effect are made possible.

FIG. 1

**Description**

BACKGROUND

The subject matter discussed herein relates to a display apparatus which displays a video making stereoscopic view possible without wearing a device for obtaining a stereoscopic view, such as special glasses.

A 3D television which can display a stereoscopic video by using shutter glasses is put on the market, and the market of the stereoscopic display is activated. As a stereoscopic display of the next generation, a technique of an autostereoscopic display which makes it possible to perceive a stereoscopic video without wearing a device for obtaining a stereoscopic view such as special glasses like shutter glasses (which is referred herein to autostereoscopic display) is under study. As a technique for implementing an autostereoscopic view, there is an integral photography (hereafter referred to as IP scheme) described in M.G. Lippmann, "Epreuves reversibles donnant la sensation du relief," J. de Phys., vol. 7, 4th series, pp. 821-825, November 1908 (referred to as Document 1). The IP scheme is a technique for reproducing a stereoscopic effect in both the lateral direction and the longitudinal direction.

In a stereoscopic display based on the IP scheme, full parallax having parallax in all directions such as upward, downward, left and right directions is implemented by putting a microlens array upon a display such as a liquid crystal display and generating a directional light ray space. In this scheme, there is a problem that red, green and blue (RGB) sub-pixels which constitute pixels of a liquid crystal display are expanded by microlenses and colors are seen separated. Against this, a method of mixing colors of sub-pixels by installing a diffuser between the liquid crystal display and the microlens array is disclosed in JP-A-2002-228974 (Fig. 1 and paragraphs 0024 to 0030) (referred to as Document 2).

In the IP scheme, how light ray information is increased becomes a key point in increasing the stereoscopic effect. However, a technique of increasing the light ray information quantity by projecting videos of a large number of projectors in superposition is disclosed in JP-A-2008-139524 (Fig. 1 and paragraphs 0006 to 0009) (referred to as Document 3).

SUMMARY

In the technique described in Document 3, light rays projected from a projector is passed through a microlens, condensed to a very small region (hereafter this region is referred to as deflection fulcrum), and expanded as directional light rays with this region serving as a fulcrum. When a person views a stereoscopic display, therefore, the light rays are recognized as a very small pixel.

If projectors are arranged sufficiently densely and adjacent deflection fulcrums are sufficiently close to each other, there are no problems. As a matter of fact, however, the space between them is wide. When a person views a screen, the screen is perceived as an unsmooth video having spaces, resulting in a problem. If the space between pixels is perceived in this way, the stereoscopic effect and the sense of picture quality are hampered even if there are a large number of pixels, resulting in a problem.

Preferably, in the present specification, therefore, a configuration in which light rays from illumination means incident on a condensing optical means are spread to make the area of the deflection fulcrums large by installing a diffuser between the condensing optical means and the illumination means such as projectors is disclosed.

More preferably, disclosed is an autostereoscopic display including a plurality of illumination means, a condensing optical means formed by arranging a plurality of optical means for condensing light rays from the illumination means, and a diffusion optical means disposed between the condensing optical means and the plurality of illumination means to increase spread of light rays from the illumination means,

an installing position of the diffusing optical means being in a range common to an image forming range including a focal depth of the plurality of illumination means and a focal depth range of the condensing optical means.

For example, a device such as a microlens array or a lenticular lens sheet corresponds to the condensing optical means.

Preferably, the diffusion optical means has a function of increasing the angle of illuminating light rays as compared with incident light rays. For example, a device called diffuser or diffusion sheet corresponds to the diffusion optical means.

A video projection apparatus such as a projector corresponds to the illumination means.

According to the implementation, a region perceived by a person as a pixel becomes wide and a space between pixels becomes hard to recognize.

According to the teaching herein, it is possible to obtain a result that the displayed stereoscopic video becomes smooth and the stereoscopic effect and the sense of picture quality can be improved.

These and other benefits are described throughout the present specification. A further understanding of the nature and advantages of the invention may be realized by reference to the remaining portions of the specification and the attached drawings.

BRIEF DESCRIPTION OF THE DRAWINGS

Fig. 1 is a concept diagram showing a configuration of an embodiment using a microlens array as a condensing optical device;

Fig. 2 is a concept diagram showing a configuration of an embodiment using two lenticular lens sheets as a condensing optical device;

Fig. 3 is a concept diagram showing light rays according to a conventional technique with attention paid to one lens;

Fig. 4 is a concept diagram showing light rays according to an embodiment with attention paid to one lens;

Figs. 5A to 5C are concept diagrams showing a configuration of an embodiment using nine projectors and how deflection fulcrums are seen; and

Fig. 6 is a concept diagram showing an embodiment in which a diffuser is installed between a visual point and a microlens array as well.

DETAILED DESCRIPTION OF THE EMBODIMENTS

<First Embodiment>

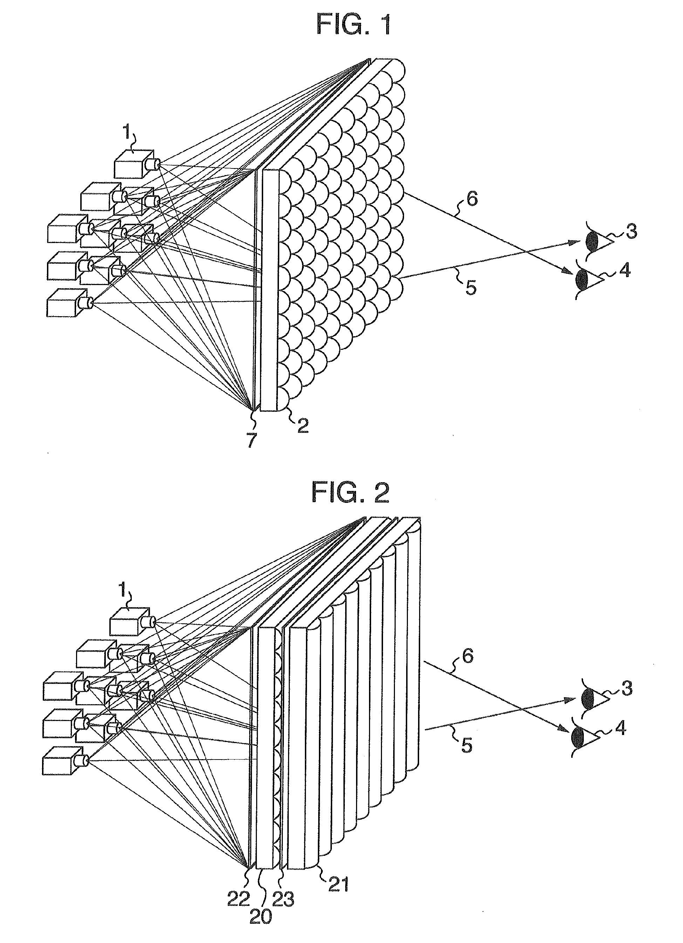

An embodiment in the case where a microlens array is used as the condensing optical device, using a diffuser as the diffusing device, and a projector is used as the video projection device will now be described with reference to Fig. 1.

Superposing projection from a projector group 1 onto a microlens array 2 is conducted. It is supposed that a person views into a direction of the microlens array from positions of a right eye 3 and a left eye 4 on the right side of Fig. 1. Light rays illuminated from the projector group 1 are spread by a diffuser 7, and then incident on the microlens array 2, condensed once, and then spread as directional light rays. A part (5 or 6 in Fig. 1) of light rays illuminated from projectors is selectively incident on each of left and right eyes of the person according to its position. Autostereoscopic viewing becomes possible by outputting information having parallax as light ray information.

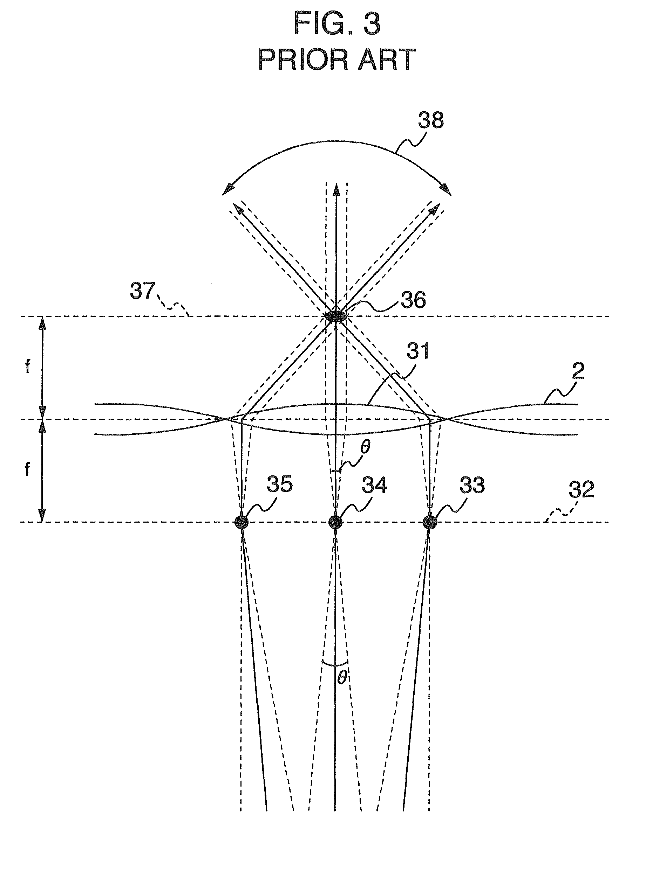

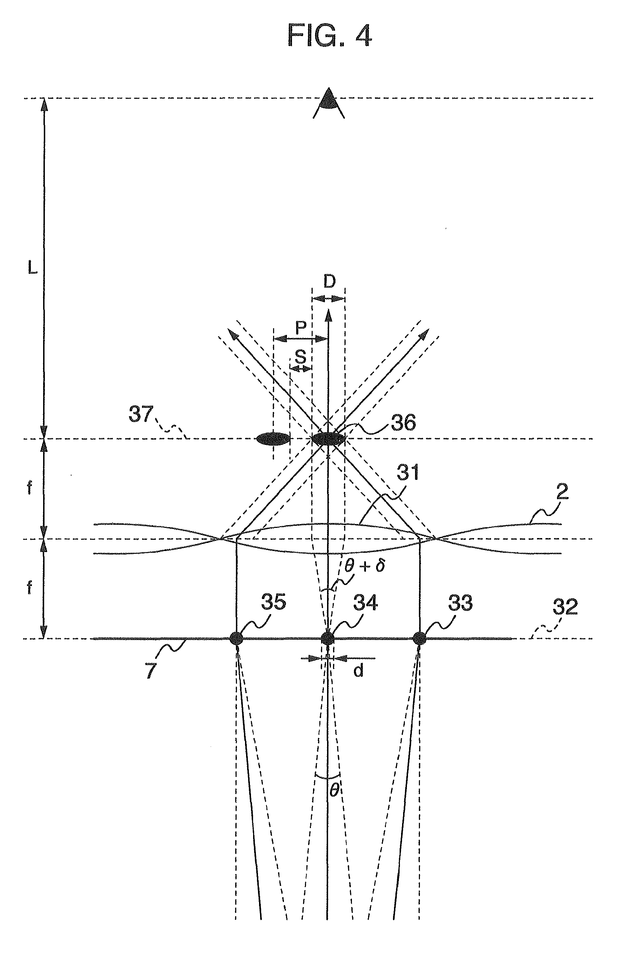

Effects of the diffuser 7 will be further described with reference to Figs. 3 and 4.

Fig. 3 shows a conventional example having no diffuser 7. Fig. 3 shows a state in which the projectors 1 are located on the lower side and light rays are emitted to the upper side. Attention is paid to three pixels (33, 34 and 35 in Fig. 3) from one projector. For explanation, supposing one light ray per pixel, respective light rays are shown.

Light rays from projectors form an image in a position 32. Therefore, it becomes possible to display a video by installing a screen in this position. As described later, however, it suffices that the installing position of the screen is within the range of focal depth of the projectors including the position 32.

If a screen is not installed but the microlens array 2 is installed in a position which is a focal length f of the microlenses away from the position 32, however, then paying attention to one lens 31 in the microlens array 2, light rays incident on the lens 31 from pixels 33, 34 and 35 in projectors are condensed to a region which is the focal length f of the microlenses away the lens 31, i.e., to a deflection fulcrum 36, crossed, and then spread in respective directions.

When a person views the bottom side in Fig. 3 from the top side, a range denoted by 38 in Fig. 3 becomes the viewing zone. In its angle range, directional rays enter eyes and they are perceived as a pixel having the size of the deflection fulcrum 36. By the way, in Fig. 3, the pixels from the projectors are shown as very small points for convenience. As a matter of fact, however, the pixels have sizes of some degree. Light rays illuminated from the lens 31 are not parallel light rays as shown in Fig. 3, but become gradually spreading light rays. In the range of the viewing zone 38, therefore, it is possible to perceive the light rays as light rays which are not discrete but continuous light rays.

At this time, the focal length f of the microlens array 2 is very short as compared with the distance between the projectors and the position 32. Therefore, the deflection fulcrum 36 becomes a small region.

Effects of the diffuser according to the embodiment will now be described with reference to Fig. 4. In Fig. 4, the diffuser 7 is installed in the position 32 which is the image forming position of the projectors and the focus position of the microlens array 2. The diffuser 7 slightly ($+\delta$) diffuses light rays emitted from projectors, and slightly widens light rays of the pixels 33, 34 and 35 as compared with Fig. 3. As a result, light rays from the projectors are illuminated from the lens 31 as light rays which are thicker as compared with Fig. 3, and the deflection fulcrum 36 is perceived as a greater pixel as compared with Fig. 3.

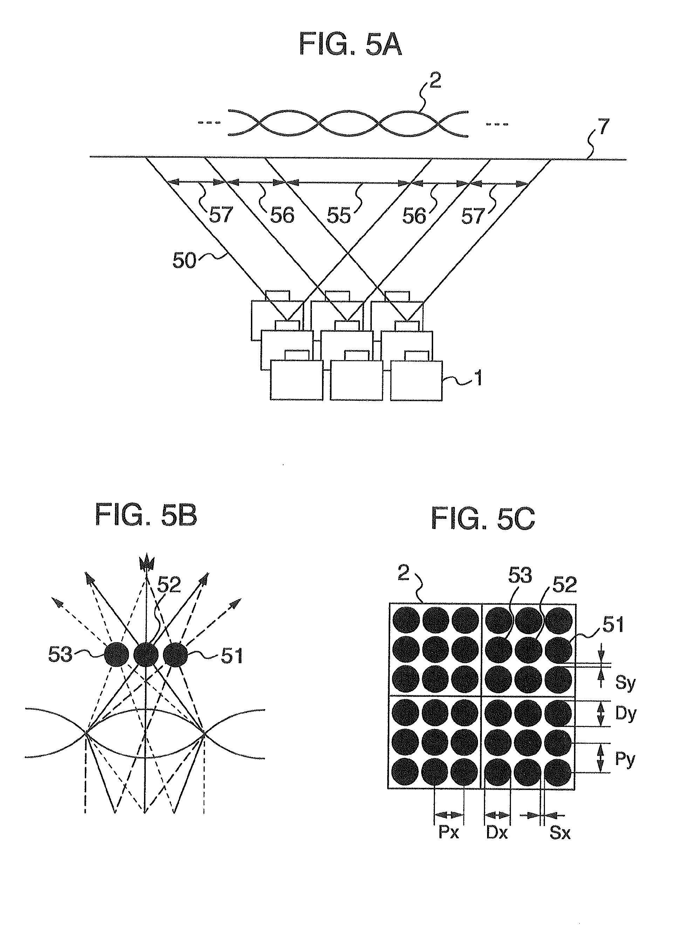

Influence upon the picture quality and the stereoscopic effect of the stereoscopic video exercised by the fact that the deflection fulcrum is perceived as a great pixel will now be described with reference to Figs. 5A to 5C. Fig. 5A shows a state in which superposed projection is conducted toward the diffuser 7 and the microlens array 2 in an example using nine projectors as the projector group 1. Fig. 5B shows a state of light rays with attention paid to one lens in Fig. 5A and only three projectors taken. Arrows of solid lines, dotted lines and dashed lines in Fig. 5B represent light rays from respective different projectors, and it is shown that light rays from respective projectors are condensed to defection fulcrums 51, 52 and 53, respectively. Fig. 5C shows a part of a state of the lens array and the deflection fulcrums obtained when the bottom direction is viewed from the upper part in Fig. 5A. Supposing that square lenses are spread all over the microlens array 2, nine deflection fulcrums corresponding to nine projectors are seen in one lens. Representing the lateral direction by x and the longitudinal direction by y, diameters of deflection fulcrums are denoted by Dx and Dy, distances between centers of deflection fulcrums are denoted by Px and Py, and spaces between deflection fulcrums are denoted by Sx and Sy.

In the conventional case where the diffuser is not installed as in the example shown in Fig. 3, the diameters (Dx, Dy) of the deflection fulcrums 51, 52 and 53 viewed from the visual point of the person become smaller and the spaces (Sx, Sy) between deflection fulcrums become greater. As a result, the viewer perceives the spaces, and the pixels look coarsely. The viewer perceives a rough picture quality, and the stereoscopic effect is also hampered. Therefore, it becomes possible to perceive a smooth image and improve the stereoscopic effect by installing the diffuser 7 to make the diameters of the deflection fulcrums great and make the spaces between the deflection fulcrums small.

At this time, the spaces (Sx, Sy) between the deflection fulcrums should be made smaller than the perception resolution of the viewer. The perception resolution of the viewer depends upon the eyesight. For example, a person having eyesight of 1.0 has an angular resolution of 1/60 degree. A maximum value of the space between deflection fulcrums should be prescribed on the basis of the supposed eyesight and the viewing distance of the display.

The diffusion angle caused by the diffuser to implement such a space between the deflection fulcrums will now be described. Hereafter, isotropy is supposed in the longitudinal direction and the lateral direction. In the case of anisotropy, however, the longitudinal direction and the lateral direction should be considered independently. The diffusion angles in the longitudinal direction and the lateral direction should be controlled by using a Light Shaping Diffuser (http: //www.osc-osc-japan.com/solution/1sd08) which is a known anisotropic diffuser, as the diffuser.

First, supposing that the diffusion angle of the diffuser is δ, elements required for calculation are defined. It is now supposed that the viewing distance of the stereoscopic display is L, the angular resolution of a supposed viewer is α, the size of one pixel obtained when pixels of a projector forms an image is d, the image forming angle of light rays which form an image on a pixel is θ (see Fig. 4), the distance between deflection fulcrums is P, and the focal length of a microlens is f. If each pixel takes the shape of a square or a rectangle, then D and d become the pixel width in the lateral direction (or in the longitudinal direction).

First, the size of the deflection fulcrum can be found according the following Expression (1).

$$D = d + 2 \times f \times \tan(\theta/2) \qquad (1)$$

For making the space S between deflection fulcrums equal to or less than the angular resolution α of the viewer, it becomes necessary to satisfy the following Expression (2).

$$S <= L \times \tan(\alpha) \qquad (2)$$

For example, supposing that the eyesight of the viewer is 1.0 (angular resolution is 1/60 degree) and the viewing distance is 2 m, the maximum distance of the space S is found to be approximately 0.58 mm from Expression (2).

The distance P between deflection fulcrums depends upon the projector arrangement and the lens pitch of the microlenses. The space S between deflection fulcrums is represented by the following Expression (3) using P.

$$S = P - D \qquad (3)$$

Therefore, the diffusion angle δ obtained from the diffuser should be determined to satisfy the following Expression (4).

$$\delta >= 2 \times \tan^{-1} \{(P - d - L \times \tan(\alpha)) / (2 \times f)\} - \theta \qquad (4)$$

In the present embodiment, the image forming range of projectors is wide as compared with the focal length of the microlens array 2. Therefore, it suffices that the position in which the diffuser 7 is installed is within the range of the focal length of projectors including the image forming position of light rays from the projectors and within the range of the focal length including the focus position of the microlens array 2.

Furthermore, as for light rays from projectors in the present embodiment, full color light rays mixed in color can be illuminated.

<Second Embodiment>

An embodiment using a lenticular lens as the condensing optical device will now be described with reference to Fig. 2. In Fig. 2, two lenticular lens sheets (20 and 21 in Fig. 2) are used instead of the microlens array shown in Fig. 1. As for the diffuser, two diffusers are used. A diffuser 22 is installed in the focus position of the lenticular lens sheet 20, and a diffuser 23 is installed in the focus position of the lenticular lens sheet 21. Since the image forming range of projectors (focal depth range of the projectors including an image forming position of light rays from the projectors) is sufficiently wide as compared with the focal length of the lenticular lens, the lenticular lens sheets 20 and 21 and the diffusers 22 and 23 should be within the image forming range of the projectors.

It is possible to make the lens space in the up-down direction different from that in the lateral direction by using the lenticular lenses as in the present embodiment. It becomes possible to individually control the number of pixels in the longitudinal direction and the lateral direction of a deflection fulcrum and the number of light rays in the longitudinal direction and the lateral direction illuminated from the deflection fulcrum. If the number of pixels in the longitudinal or lateral direction of a deflection fulcrum is sufficiently large and the minimum value of $\delta$ in Expression (4) is equal to or less than 0, then it is not necessary to conduct diffusion in that direction.

Furthermore, there is also a possibility that the lenticular lenses can be manufactured at a lower cost than that of the microlens array.

<Third Embodiment>

In another embodiment, a holographic optical element utilizing the diffraction effect is used as the condensing optical device. It is also possible to utilize the holographic optical element like the above-described lenticular lens. It is also possible to combine condensing optical devices in two directions and to manufacture them on one sheet. As a result, one diffuser is obtained, and it should be installed in the focus position of the holographic optical element.

<Fourth Embodiment>

An embodiment in which the diffusion angle of the diffuser is changed according to the position will now be described with reference to Fig. 5A. In Fig. 5A, a region where light rays are illuminated from three central projectors is denoted by 50, and projectors are installed so as to make the number of superposing projectors differ according to the place. In other words, light rays from three projectors are superposed in a region 55. In a region 56, there are only light rays from two projectors. In a region 57, there are only light rays from one projector.

As an ideal stereoscopic display, it is desirable that the number of superposing projectors is the same in all regions. In actuality, however, the same number of superposing projectors cannot be implemented because of various constraint conditions in some cases. In some applications utilizing a stereoscopic display, different number of superposing projectors poses no problem. Therefore, the above-described way of installation is also allowed.

In this case, the number of deflection fulcrums per microlens shown in Fig. 5C changes, and Px and Py change according to the number of superposing projectors. Instead of making the diffusion angle of the diffuser the same over the entire diffuser, therefore, the difference angle is defined so as to satisfy the expression for finding the diffusion angle $\delta$ according to the number of superposing projectors.

According to the present embodiment, it becomes possible to implement a smooth picture quality over the entire screen even in the case where the number of superposing projectors changes depending upon the place.

<Fifth Embodiment>

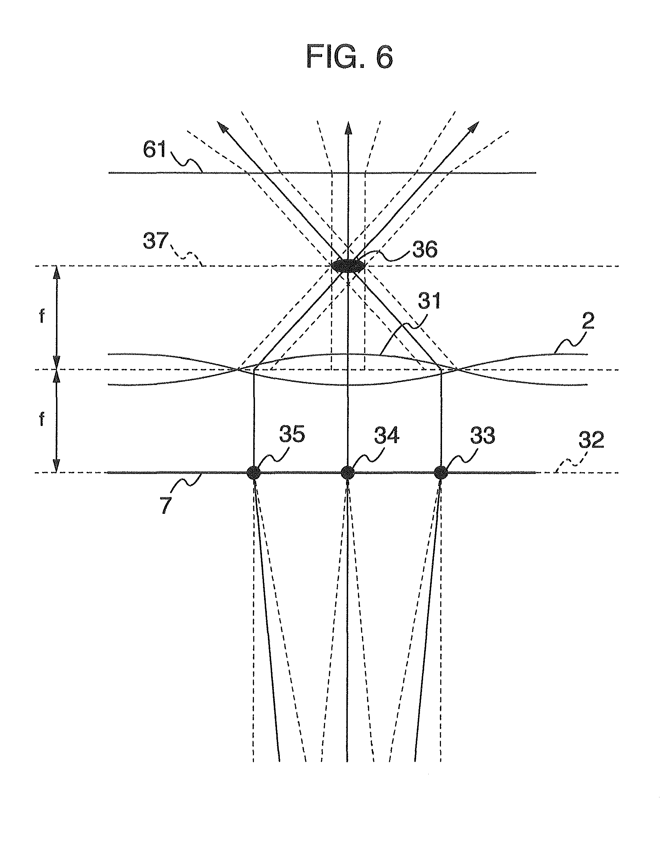

A method for installing the diffuser between the condensing optical device and the visual point as well will now be described with reference to Fig. 6. In the present embodiment, a diffuser 61 is installed between the microlens array 2 and the visual point as well.

The diffusion angle of the diffuser 7 becomes a small angle. In such a diffuser, dispersion occurs in the diffusion angle in the plane, depending upon the manufacturing method. In that case, the dispersion is visually perceived as roughness or glaring.

Therefore, dispersion can be made close to uniform by conducting diffusion again with the diffuser 61.

If the diffuser 7 is not installed but only the diffuser 61 is installed, then the diffuser 61 brings about an effect that the size of the deflection fulcrum does not change and the spread of light rays becomes great. Smoothness in the image is implemented by mixture of light rays from adjacent projectors. Therefore, blurring is perceived as a stereoscopic video.

On the other hand, the angle at which diffusion is conducted by the diffuser 61 can be made small by using it jointly with the diffuser 7. It becomes possible to keep the blurring of the stereoscopic video to the minimum.

The specification and drawings are, accordingly, to be regarded in an illustrative rather than a restrictive sense. It will, however, be evident that various modifications and changes may be made thereto without departing from the spirit and scope of the invention(s) as set forth in the claims.

## Claims

1. An autostereoscopic display comprising:

   a plurality of illumination means (1);
   a condensing optical means (2) formed by arranging a plurality of optical means for condensing light rays from the illumination means; and
   a diffusion optical means (7) disposed between the condensing optical means and the plurality of illumination means to increase spread of light rays from the illumination means, wherein
   an installing position of the diffusing optical means being in a range common to an image forming range including a focal depth of the plurality of illumination means and a focal depth range of the condensing optical means.

2. The autostereoscopic display according to claim 1, wherein the deflection fulcrum is defined as a region in which light rays of a plurality of pixels from one illumination means are condensed by the condensing optical means to cross each other and the diffusion optical means (7) has a diffusion angle ($\delta$) to spread illumination light rays from the illumination means to make a space (S) between adjacent deflection fulcrums in deflection fulcrums generated by the plurality of illumination means equal to or less than a human perception resolution ($\alpha$).

3. The autostereoscopic display according to claim 2, wherein the diffusion angle ($\delta$) of the diffusion optical means (7) satisfies the following expression:

$$\delta >= 2 \text{ x } \tan^{-1} \{(P - d - L \text{ x } \tan(\alpha)) / (2 \text{ x } f)\} - \theta$$

   where L is a viewing distance of the autostereoscopic display, $\alpha$ is an angle resolution of a viewer, d is a size of one pixel of an image formed by the illumination means, $\theta$ is an image forming angle of light rays which form an image on a pixel, P is a distance between deflection fulcrums, and f is a focal length of the condensing optical means.

4. The autostereoscopic display according to claim 1, wherein the condensing optical means comprises a microlens array (2).

5. The autostereoscopic display according to claim 2, wherein the condensing optical means comprises a microlens array (2).

6. The autostereoscopic display according to claim 3, wherein the condensing optical means comprises a microlens array (2).

7. The autostereoscopic display according to claim 1, wherein the condensing optical means comprises two lenticular sheets (20 and 21), and
   diffusion optical means (22 and 23) are installed for the two lenticular sheets, respectively.

8. The autostereoscopic display according to claim 2, wherein the condensing optical means comprises two lenticular sheets (20 and 21), and
   diffusion optical means (22 and 23) are installed for the two lenticular sheets, respectively.

9. The autostereoscopic display according to claim 3, wherein the condensing optical means comprises two lenticular sheets (20 and 21), and
   diffusion optical means (22 and 23) are installed for the two lenticular sheets, respectively.

10. The autostereoscopic display according to claim 1, wherein the condensing optical means comprises a holographic optical element.

11. The autostereoscopic display according to claim 2, wherein the condensing optical means comprises a holographic optical element.

12. The autostereoscopic display according to claim 1, wherein a second diffusion optical means (61) is installed between the condensing optical means and a visual point.

13. The autostereoscopic display according to claim 2, wherein a second diffusion optical means (61) is installed between the condensing optical means and a visual point.

## FIG. 1

## FIG. 2

# FIG. 3
# PRIOR ART

# FIG. 4

## FIG. 5A

## FIG. 5B

## FIG. 5C

## FIG. 6

**EP 2 442 579 A2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002228974 A

- JP 2008139524 A

**Non-patent literature cited in the description**

- **M.G. LIPPMANN.** Epreuves reversibles donnant la sensation du relief. *J. de Phys.,* November 1908, vol. 7, 821-825